# EUROPÄISCHE PATENTSCHRIFT

(11) **EP 1 923 300 B1**
(45) Veröffentlichungstag und Bekanntmachung des Hinweises auf die Patenterteilung: **06.01.2010**
(21) Anmeldenummer: 07021526.4
(22) Anmeldetag: 06.11.2007
(51) Int. Cl.: B62D 25/08, B62D 21/15

(54) **Verfahren zum Einbau einer Kühlkomponenten aufweisenden Baueinheit in ein Kraftfahrzeug und Vorrichtung zur Durchführung des Verfahrens**
Method of installing a cooling module in a motor vehicle and device for implementing the method
Procédé de montage d'un module de refroidissement dans un véhicule automobile et dispositif de réalisation du procédé

(30) Priorität: 15.11.2006 DE 102006054971
(43) Veröffentlichungstag der Anmeldung: 21.05.2008
(73) Patentinhaber: Behr GmbH & Co. KG, 70469 Stuttgart (DE); HBPO GmbH, 59552 Lippstadt (DE); Frape Behr S.A., 08040 Barcelona (ES)
(72) Erfinder: Höglinger, Markus, 70619 Stuttgart (DE); Schöning, Ralf, 33442 Herzebröck-Clarholz (DE); Opperbeck, Guido, 59558 Lippstadt (DE); Pinol, Sergio, 08860 Castelldefels (ES)
(74) Vertreter: Heumann, Christian

(56) Entgegenhaltungen:
- EP-A- 0 908 375
- EP-A- 1 557 311
- EP-A- 1 602 808
- EP-B- 1 188 645
- WO-A-02/064394
- DE-A1- 2 634 990
- DE-A1-102004 028 932
- JP-A- 2003 146 244
- JP-A- 2003 237 628
- JP-A- 2003 320 856

## Beschreibung

Die Erfindung betrifft ein Verfahren zum Einbau einer Kühlkomponenten umfassenden Baueinheit in ein Kraftfahrzeug nach dem Oberbegriff des Patentanspruches 1, eine Vorrichtung zur Durchführung des Verfahrens nach dem Oberbegriff des Patentanspruches 6 sowie eine Anordnung der Baueinheit in einem Tragrahmen nach dem Oberbegriff des Patentanspruches 29.

Es ist bekannt, die Kühlkomponenten eines Kraftfahrzeuges in einer Baueinheit, einem so genannten Kühlmodul, zusammenzufassen, das Kühlmodul im Frontbereich des Kraftfahrzeuges anzuordnen und am Fahrzeugrahmen zu befestigen. Die Kühlkomponenten umfassen im Wesentlichen Wärmeübertrager wie Kühlmittelkühler, Ladeluftkühler, Ölkühler sowie Kältemittelkondensatoren, ferner Komponenten einer Luftfördereinrichtung wie eine Lüfterzarge, einen Lüfter mit Antriebseinrichtung und schließlich Luftleiteinrichtungen wie z. B. Jalousien und Staudruckklappen. Die Kühlkomponenten werden in der Regel in einem Tragrahmen oder einem Montageträger eines Frontendmoduls aufgenommen, wobei der Tragrahmen oder das Frontendmodul am Fahrzeugrahmen befestigt wird. Ein Frontendmodul, welches zusätzlich zu den Kühlkomponenten, z. B. auch die Scheinwerfer des Kraftfahrzeuges aufnimmt, wird an den Stirnseiten der Längsträger des Fahrzeugrahmens befestigt.

Durch die DE 101 17 278 A1 wurde ein solches Frontendmodul bekannt, welches einen Montageträger aufweist, welcher Kühlkomponenten und Scheinwerfer aufnimmt und an den Längsträgern des Fahrzeuges durch Verschraubung befestigt wird.

Durch die EP 1 645 491 A2 wurde ein weiteres Frontendmodul mit einem Montageträger bekannt, welcher aus einem U-förmig ausgebildeten Rahmenunterteil und einer oberen abnehmbaren Traverse besteht, welche über eine zusätzliche mittig angeordnete Stütze bzw. einen Zuganker mit der unteren Traverse verbunden ist.

Es ist bekannt, die Kühlkomponenten, insbesondere die Wärmeübertrager im Kraftfahrzeug derart anzuordnen und zu lagern, dass sie bei äußerer Krafteinwirkung, beispielsweise einem Frontalstoß ausweichen können, sodass eine Beschädigung der Wärmeübertrager vermieden bzw. herabgesetzt werden kann.

Durch die EP 1 557 311 A1 wurde eine Anordnung von Wärmeübertragern in einem Kraftfahrzeug bekannt, bei welcher ein frontseitig angeordneter Ölkühler über seitliche Zapfen in karosserieseitigen Lagern aufgenommen ist, welche den Ölkühler bei äußerer Krafteinwirkung freigeben.

Durch die EP 1 188 645 B1 wurde ein Frontendmodul mit einer Kühlkassette bekannt, welche gegenüber dem Montageträger des Frontendmoduls nachgiebig mittels elastischer Elemente befestigt ist, sodass sich die Kühlkassette mit den Kühlkomponenten bei einem Stoss auf das Fahrzeug vom Montageträger löst.

Durch die EP 1 602 808 A1 wurde ein Frontend für ein Kraftfahrzeug mit einem schwenkbaren Tragrahmen bekannt, in welchem Wärmeübertrager, insbesondere ein Ladeluftkühler angeordnet sind. Der Ladeluftkühler wird über Ladeluftleitungen und Verbindungsmanschetten mit dem Ausgangsstutzen eines Kompressors und dem Ansaugstutzen des Verbrennungsmotors verbunden. Zur Erleichterung der Montage ist der Ladeluftkühler schwenkbar in dem schwenkbaren Rahmen angeordnet, wodurch der Abstand zwischen den Anschlussstutzen des Ladeluftkühlers und dem Motor bzw. dem Kompressor verkürzt wird. Anschließend wird der schwenkbare Tragrahmen in eine senkrechte Stellung geschwenkt und der Ladeluftkühler in den Tragrahmen eingeclipst.

Bei der Montage der Kühlkomponenten, d. h. beim Einbau des Kühlmoduls in das Fahrzeug werden die Wärmeübertrager wie Kühlmittelkühler, Ladeluftkühler und Ölkühler über Schläuche oder Leitungen mit den entsprechenden Kreisläufen der Antriebsmaschine wie Kühlmittelkreislauf, Ansaugsystem und Ölkreislauf verbunden. Nach dieser so genannten Verschlauchung muss das Kühlmodul gegenüber der Antriebsmaschine, in Fahrtrichtung gesehen, einen Sicherheitsabstand aufweisen, weil zwischen Kühlmodul bzw. Frontendmodul einerseits und der Antriebsmaschine andererseits Relativbewegungen aufgrund der elastischen Aufhängung des Motors auftreten. Der Motor ist in der Regel auf einem Unterrahmen, auch Fahrschemel genannt, elastisch, d. h. über entsprechende Feder- und Dämpfungselemente abgestützt, wobei der Fahrschemel mit dem Motor am Fahrzeugrahmen, insbesondere dessen Längsträgern befestigt ist, in der Regel unter Zwischenschaltung von Dämpfungselementen, so genannten Silentblöcken. Der Unterrahmen oder Fahrschemel, an welchem auch die Radaufhängung befestigt sein kann, wird ebenso wie die Hinterachse des Fahrzeuges als vormontierte Baugruppe an das Montageband des Kraftfahrzeuges geliefert. Der obere Teil des Fahrzeuges, der im Wesentlichen den Fahrzeugrahmen und die Karosserie umfasst, wird ebenfalls separat vorgefertigt, anschließend werden die Baugruppen der oberen und der unteren Ebene in einem Montageschritt, der so genannten Hochzeit, zusammengeführt. In diesen Montageprozess muss die Montage des Kühlmoduls bzw. des Frontendmoduls eingebunden werden.

Es ist Aufgabe der vorliegenden Erfindung, den Einbauprozess eines Kühlmoduls in ein Kraftfahrzeug zu vereinfachen und zu beschleunigen und eine Vorrichtung bereitzustellen, mittels welcher dieser Einbauprozess vorteilhaft durchgeführt werden kann. Es ist auch Aufgabe der Erfindung, bei einer Anordnung von Kühlmodul und Tragrahmen, insbesondere bei einem Montageträger eines Frontendmoduls oder eines Radhausmoduls den Einbau und die Befestigung des Kühlmoduls zu vereinfachen.

Die Aufgabe der Erfindung wird durch ein Verfahren mit den Merkmalen des Patentanspruches 1 gelöst, wobei sich vorteilhafte Verfahrensvarianten aus den Unteransprüchen ergeben.

Die Aufgabe der Erfindung wird auch durch eine Vorrichtung zur Durchführung des Verfahrens mit den Merkmalen der Patentansprüche 6 und 7 gelöst, wobei sich vorteilhafte Ausgestaltungen der Vorrichtung aus den Unteransprüchen ergeben.

Bei dem erfindungsgemäßen Verfahren erfolgt der Einbau der aus Kühlkomponenten zusammengesetzten Baueinheit, d. h. eines Kühlmoduls in das Kraftfahrzeug in mehreren Verfahrensschritten, welche an den Montageprozess des Kraftfahrzeuges angepasst sind. Zunächst wird das Kühlmodul gegenüber dem Unterrahmen oder Fahrschemel, auf dem der Motor angeordnet ist, vorfixiert, d. h. das Kühlmodul nimmt eine vorläufige Position, die so genannte Vorposition ein, bei welcher sich das Kühlmodul in einem minimalen Abstand (in Fahrtrichtung gesehen) zum Motor befindet. In dieser Vorposition wird das Kühlmodul "verschlaucht", d. h. die einzelnen Wärmeübertrager wie z. B. Kühlmittelkühler, Ladeluftkühler und Ölkühler werden an die entsprechenden Schläuche oder Leitungen angeschlossen und damit mit den betreffenden Kreisläufen verbunden. Vorteilhaft hierbei ist, dass die Verschlauchung in Folge der unmittelbaren Nähe des Kühlmoduls zum Motor schnell und einfach erfolgen kann, zumal die einzelnen Wärmeübertrager frei zugänglich sind. Nach diesem Verfahrensschritt der Verschlauchung wird der Unterrahmen mit dem Fahrzeugrahmen(Hauptrahmen) verbunden, d. h. es findet die so genannte Hochzeit statt, bei welcher die Karosserie einschließlich Rahmen mit den unteren Baugruppen des Fahrzeuges verbunden wird. Nach der Hochzeit wird der Tragrahmen oder der Montageträger eines Frontendmoduls mit dem Fahrzeugrahmen, insbesondere mit dessen Längsträgern verbunden, wobei Tragahmen bzw. Montageträger und Kühlmodul noch von einander getrennt, d. h. in Fahrtrichtung (X-Achse des Fahrzeuges) gesehen, versetzt zueinander angeordnet sind. Als letzter Verfahrensschritt erfolgt eine Verschiebung des Kühlmoduls bzw. der Baueinheit aus der Vorposition in die Endposition, bei welcher sich das Kühlmodul innerhalb des Tragrahmens bzw. des Montageträgers des Frontendmoduls befindet. Im Unterschied zum Stand der Technik wird das Kühlmodul also nicht komplett vormontiert am Fahrzeugrahmen befestigt, sondern erfindungsgemäß werden Kühlmodul und Tragrahmen bzw. Montageträger zunächst separat montiert und anschließend zusammengeführt. Dadurch ergibt sich der bereits erwähnte Vorteil einer freien Zugänglichkeit der Wärmeübertrager bei der Verschlauchung, wodurch die Montagezeit verkürzt werden kann. Ferner ergibt sich der Vorteil, dass die Baueinheit in einem einzigen Bauteil, dem Tragrahmen oder Montageträger des Frontendmoduls oder eines Radhausmoduls befestigt ist, was die Toleranzabstimmung vereinfacht und zu einem Gewinn an Bauraum führt. Aufgrund der Toleranzen wird auch der Dichtspalt zwischen Wärmeübertragern und Tragrahmen respektive Montageträger verringert, sodass sich eine vereinfachte Dichtmöglichkeit ergibt. Gegenüber dem Stand der Technik ergibt sich auch ein Gewichtsvorteil, da dort zum Teil aufwändige und schwere Bauteile zur Lagerung der Baueinheit verwendet werden.

Nach einer vorteilhaften Ausführung der Erfindung wird die Baueinheit zur Vorfixierung zunächst entgegen der Fahrtrichtung verschoben, d. h. in Richtung Motor. Die anschließende Verschiebung in die Endposition, d. h. in den Tragrahmen respektive Montageträger erfolgt in Fahrtrichtung, d. h. in umgekehrter Richtung. Daraus ergibt sich der Vorteil, dass dieser Montageprozess einfach, d. h. mit relativ einfachen Handhabungsgeräten maschinell durchgeführt werden kann.

Vorteilhafterweise entspricht der Verschiebeweg, welcher von der Baueinheit zwischen Vor- und Endposition zurückgelegt wird, dem Sicherheitsabstand, welcher zwischen der Baueinheit und dem Motor aufgrund der im Betreib auftretenden Relativbewegungen eingehalten werden muss. In der Vorposition befindet sich die Baueinheit somit in unmittelbarer Nähe zum Motor, während sie in der Endposition den erforderlichen Sicherheitsabstand zum Motor aufweist.

Nach einer vorteilhaften Verfahrensvariante wird die Baueinheit beim Verschieben aus der Vor- in die Endposition im Tragrahmen bzw. im Montageträger des Frontendmoduls zentriert und anschließend am Tragrahmen bzw. Montageträger befestigt, d. h. an ein und demselben Bauteil.

Nach einer weiteren vorteilhaften Ausgestaltung der Erfindung wird die Baueinheit beim Befestigungsvorgang gegenüber dem Tragrahmen elastisch verspannt, sodass ein spielfreier Sitz der Baueinheit im Tragrahmen bzw. Montageträger gewährleistet ist. Ferner wird durch diese Verspannung der elastischen Elemente deren Verschleiß minimiert.

Erfindungsgemäß ist ferner eine Vorrichtung zur Durchführung des vorgenannten Verfahrens vorgesehen, wobei die Vorrichtung die am Einbauprozess beteiligten Elemente und Bauteile umfasst, nämlich die aus Kühlkomponenten bestehende Baueinheit (Kühlmodul), den Tragrahmen oder einen Montageträger eines Frontendmoduls, den Fahrzeugrahmen und den Unterrahmen oder Fahrschemel, welcher am Fahrzeugrahmen im Laufe des Montageprozesses befestigt wird. Erfindungsgemäß sind am Unterrahmen und an der Baueinheit Vorfixierelemente vorgesehen, welche sich bei einer Verschiebung in oder entgegen der Fahrtrichtung, d. h. in X-Richtung oder in -X-Richtung fügen oder lösen lassen.

Gemäß einer vorteilhaften Alternative können die Vorfixierelemente - anstatt am Unterrahmen - auch an einer Fördereinrichtung der Montagelinie, einer so genannten Förderplattform, befestigt sein und dort verbleiben. Der Vorteil dieser Alternative besteht in einer Gewichtsreduzierung für das Fahrzeug.

Ferner sind erfindungsgemäß an der Baueinheit und am Tragrahmen bzw. am Montageträger korrespondierende Befestigungselemente vorgesehen, die sich ebenfalls in X-Richtung, d. h. in Fahrtrichtung fügen lassen.

Die Vorfixierelemente sind vorteilhafterweise als gabelförmige Aufnahmeelemente ausgebildet und vorzugsweise am Unterrahmen befestigt, während die korrespondierenden Vorfixierelemente als Querzapfen ausgebildet und vorzugsweise an der Baueinheit befestigt sind. Die gabelförmigen Aufnahmeelemente sind derart ausgebildet, beispielsweise mit einer Vertiefung, dass eine Einrastung der Baueinheit am Unterrahmen und damit eine Vorfixierung zum Zwecke der Verschlauchung erreicht werden. Zusätzlich kann die Baueinheit im oberen Bereich temporär über einen Bügel oder ein ähnliches Funktionselement gesichert werden.

In weiterer vorteilhafter Ausgestaltung der Erfindung sind an den korrespondierenden Befestigungselementen elastische Elemente, insbesondere Elemente aus einem Elastomer vorgesehen, welche eine elastische Verspannung der Baueinheit gegenüber dem Tragrahmen bzw. Montageträger ermöglichen. Außerdem ist dadurch eine wirksame Schwingungs- und Geräuschentkoppelung der Baueinheit gegenüber dem Fahrzeug gegeben.

Die Befestigungselemente sind einerseits in die Baueinheit, insbesondere deren Wärmeübertrager, möglicherweise jedoch auch in eine Lüfterhaube als Teil der Baueinheit integriert und andererseits am Tragrahmen bzw. Montageträger angeordnet. Bevorzugt sind die Befestigungselemente am Montageträger als Längszapfen ausgebildet (in X-Richtung verlaufend), welche in entsprechende elastische Buchsen in der Baueinheit eingreifen. Andererseits sind Befestigungselemente mit Querzapfen vorgesehen, welche in als Kulissenlager ausgebildete Befestigungselemente an der Baueinheit eingreifen. Durch unterschiedliche Wahl der Lagerabstände der Befestigungslager der Baueinheit und des Tragrahmens bzw. des Montageträgers lässt sich eine elastische Verspannung der Baueinheit gegenüber dem Tragrahmen erreichen. Infolge der kulissenartigen Ausbildung der Befestigungselemente an der Baueinheit kann die Verspannung während des in X-Richtung verlaufenden Befestigungsvorganges bewirkt werden.

In weiterer vorteilhafter Ausgestaltung der Erfindung weisen die Befestigungselemente kraftschlüssige Rückhaltelemente, vorzugsweise in Form eines Ringwulstes oder eines quer zur Fahrtrichtung verlaufenden Wulstes am Kulissenlager auf. Damit werden eine einfache Montage und eine Fixierung des Kühlmoduls in X-Richtung ermöglicht sowie in -X-Richtung eine wirkungsvolle Rückhaltekraft, z. B. bei der Beschleunigung des Fahrzeuges.

In weiterer vorteilhafter Ausgestaltung der Erfindung sind die Befestigungs- und/oder Vorfixierelemente an Wärmeübertragern der Baueinheit, insbesondere deren Sammelkästen, die vorzugsweise aus Kunststoff hergestellt sind, angeordnet. Dadurch ergeben sich vielfältige Optionen für die Ausgestaltung der Befestigungselemente, z. B. in Form von Zapfen oder Aufnahmeöffnungen in Form eines Auges oder einer Lasche oder auch in Form einer kulissenförmigen Führung.

Nach einer weiteren bevorzugten Ausführungsform sind die Befestigungselemente derart ausgebildet, dass die Baueinheit bei einer äußeren Krafteinwirkung über einem bestimmten Schwellwert, z. B. bei einem Frontalstoß auf das Kraftfahrzeug freigegeben wird, sodass die Baueinheit dem Stoß entgegen der Fahrtrichtung ausweichen kann. Damit wird ein vorteilhaftes Crashverhalten für die Baueinheit bzw. das Frontendmodul erreicht. Durch die Vorfixierelemente wird zumindest im unteren Bereich des Kühlmoduls eine geführte Bewegung zurück in die Vorfixierposition (Vorposition) bewirkt.

Ferner ist es vorteilhaft, am Tragrahmen bzw. am Montageträger umlaufend ein Dichtmittel, vorzugsweise als angespritzte Dichtlippe ausgebildet, vorzusehen, welches den Spalt zu der Baueinheit, insbesondere den Wärmeübertragern abdichtet. Die Abdichtung erfolgt automatisch bei der Montage der Baueinheit, d. h. bei deren Verschiebung in die Endposition, wobei sich die Dichtlippe am Kühlmodul form- und/oder kraftschlüssig anlegt.

Eine weitere bevorzugte Ausführung sieht vor, dass auf der Frontseite des Tragrahmens bzw. des Montageträgers eine Luftführung angeordnet ist, die aus ineinander schiebbaren, d. h. teleskopierbaren Luftführungselementen besteht. Damit kann die Luftzufuhr vom Lufteintritt in das Fahrzeug (Kühlergrill) bis zum Tragrahmen kanalisiert, d. h. der Luftzustrom zu den Wärmeübertragern verbessert werden. Darüber hinaus wird der Vorteil eines günstigen Crashverhaltens erreicht, da sich die Luftführungselemente zusammenschieben lassen. Vorteilhaft ist das Luftführungselement aus einem Schaummaterial hergestellt, wodurch eine Gewichtsreduktion erreicht werden kann und dennoch die Luftführung die geeignete Stabilität aufweist. Auch ist es zweckmäßig, wenn die Luftführung beispielsweise wie ein Kasten oder Rahmen ausgebildet ist. Auch ist es vorteilhaft, wenn die Luftführung ein- oder mehrteilig ausgebildet ist.

Ein Ausführungsbeispiel der Erfindung ist in der Zeichnung dargestellt und wird im Folgenden näher beschreiben. Es zeigen
- Fig. 1: eine schematische Darstellung eines Kühlmoduls in einer Vorposition (Vorfixierung),
- Fig. 2: das Kühlmodul in Vorposition mit Montageträger,
- Fig. 3: das Kühlmodul mit Montageträger in Endposition,
- Fig. 4: eine 3-D-Darstellung des Kühlmoduls und eines Unterrahmens vor der Montage,
- Fig. 5: das Kühlmodul in Vorposition am Unterrahmen vorfixiert und Längsträger eines Fahrzeugrahmens,
- Fig. 6: einen unteren Ausschnitt des Kühlmoduls und des Unterrahmens mit Lager zur Vorfixierung,
- Fig. 7: einen Ausschnitt wie in Fig. 6, wobei das Kühlmodul aus der Vorposition gelöst ist,
- Fig. 8: das Kühlmodul, aufgenommen in einem Montageträger eines Frontendmoduls, mit Längsträgern und Motor,
- Fig. 9: das Kühlmodul mit Unterrahmen und Motor (ohne Montageträger und Längsträger),
- Fig. 10: einen oberen Ausschnitt des Kühlmoduls und des Montageträgers mit korrespondierenden Befestigungselementen,
- Fig. 11: eine Teilansicht des Kühlmoduls von hinten (ohne Montageträger),
- Fig. 12: einen unteren Eckausschnitt des Kühlmoduls mit Kulissenlager,
- Fig. 13: einen unteren Ausschnitt des Kühlmoduls sowie des Montageträgers mit Kulissenlager und Querzapfen,
- Fig. 14a, 14b: eine schematische Darstellung des Kühlmoduls vor und nach der Montage mit Dichtungselement und
- Fig. 15: eine schematische Darstellung des Montageträgers mit frontseitiger, teleskopierbarer Luftführung.

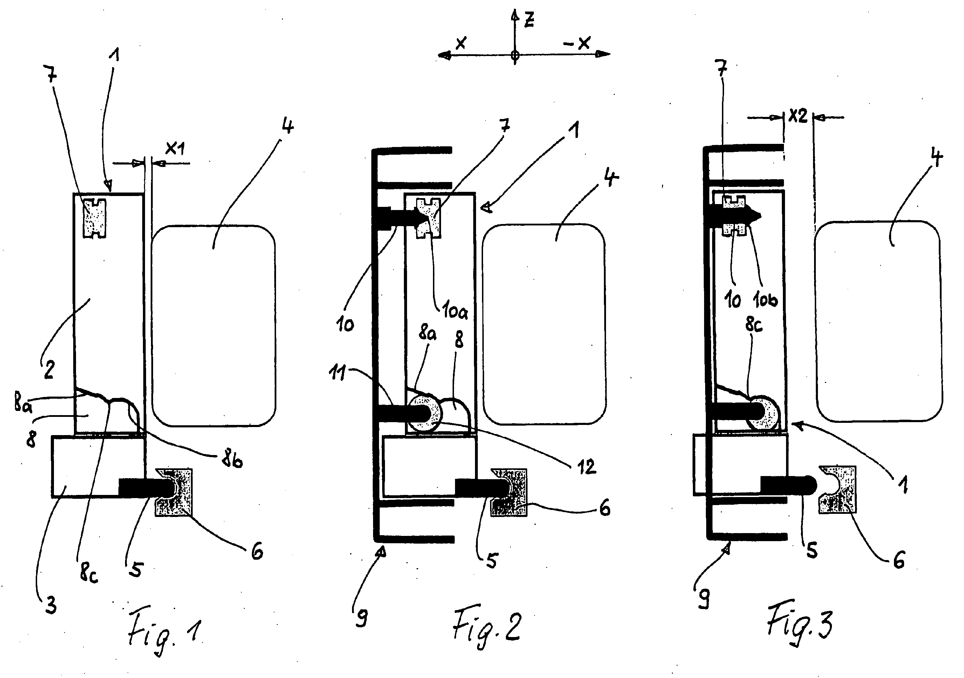

**Fig. 1** zeigt in einer schematischen Darstellung eine aus Kühlkomponenten bestehende Baueinheit 1, im Folgenden auch Kühlmodul genannt, welches hier vereinfacht einen Kühlmittelkühler 2 und einen darunter angeordneten Ladeluftkühler 3 aufweist. Beide Wärmeübertrager 2, 3 sind auf nicht dargestellte Weise miteinander zu einem Block verbunden. Neben dem Kühlmodul 1 ist mit einem minimalen Abstand X1 eine Antriebsmaschine 4 eines nicht dargestellten Kraftfahrzeuges angeordnet. Die Antriebsmaschine 4 ist vorzugsweise als Verbrennungsmotor ausgebildet und wird im Folgenden auch kurz Motor genannt. Am unteren Wärmeübertrager 3, dem Ladeluftkühler, ist ein erstes Vorfixierelement 5 befestigt, welches von einem zweiten gabelförmig ausgebildeten Vorfixierelement 6 aufgenommen wird, welches - was hier nicht dargestellt ist - an einem Unterrahmen, auch Fahrschemel genannt, befestigt ist. Im Kühlmittelkühler 2 sind ein oberes elastisch ausgebildetes Befestigungselement 7 in Form einer elastomeren Buchse und ein unteres als Kulissenlager 8 ausgebildetes Befestigungselement angeordnet, d. h. in den Wärmeübertrager 2 integriert. Das Kulissenlager 8 weist eine aus Einführschräge 8a, Aufnahmeöffnung 8b und Wulst 8c zusammengesetzte Kontur auf.

Die Vorfixier- und Lagerelemente können jedoch auch an anderen Wärmeübertragern bzw. an den Gehäusen von Luftförder- und Regeleinrichtungen angebracht sein.

Die Darstellung gemäß Fig. 1 zeigt das Kühlmodul 1 in einer Position der Vorfixierung, im Folgenden auch Vorposition genannt, in welcher das Kühlmodul 1 zum Motor 4 einen minimalen Abstand X1 aufweist. In dieser Vorposition wird die so genannte Verschlauchung des Kühlmoduls 1 mit dem Motor 4 vorgenommen, d. h. nicht dargestellte Schläuche oder Leitungen, z. B. Kühlmittelschläuche und Ladeluftschläuche werden mit dem Kühlmittelkreislauf des Motors 4 bzw. mit dem Ansaugsystems des Motors 4 verbunden. Nach der Verschlauchung wird der nicht dargestellte Unterrahmen (Fahrschemel) im Zuge des Montageprozesses des Kraftfahrzeuges mit dem Fahrzeugrahmen verbunden, d. h. bei der so genannten Hochzeit, bei welcher die oberen und unteren Baugruppen des Kraftfahrzeuges in vertikaler Richtung miteinander verbunden werden.

**Fig. 2** zeigt das Kühlmodul 1 wiederum in seiner Vorposition, d. h. es ist gegenüber dem nicht dargestellten Unterrahmen vorfixiert. In einem weiteren Verfahrensschritt wird ein Montageträger 9 eines Frontendmoduls entgegen der Fahrtrichtung des Kraftfahrzeuges, dargestellt durch den Pfeil -X, an das Kühlmodul 1 herangeführt, was mit einem nicht dargestellten Handhabungsgerät erfolgen kann. Der Montageträger 9 weist obere und untere Befestigungselemente 10, 11 auf, welche einerseits als in X-Richtung verlaufende Zapfen 10, im Folgenden auch Längszapfen genannt, und andererseits als quer zur X-Richtung verlaufende Zapfen 11, im Folgenden auch Querzapfen genannt, ausgebildet sind. Bei einer Bewegung des Montageträgers 9 in negativer X-Richtung greift der stirnseitig mit einer Zentrierspitze 10a versehene Zapfen 10 in eine Bohrung der elastischen Buchse 7 ein. Der untere Querzapfen 11 trägt eine elastomere Buchse 12, welche in das Kulissenlager 8 eingeführt wird. Infolge der Zentrierspitze 10a und der Einführschräge 8a des Kulissenlagers 8 wird das Kühlmodul 1 gegenüber dem Montageträger 9 bei der Montagebewegung in negativer X-Richtung zentriert. Der Montageträger 9 wird in der dargestellten Position - was hier nicht erkennbar ist - mit einem nicht dargestellten Fahrzeugrahmen, d. h. dessen Längsträgern verschraubt.

**Fig. 3** zeigt das Kühlmodul 1 in seiner Endposition, d. h. fertig montiert, verschlaucht und im Montageträger 9 befestigt. Die Vorfixierelemente 5, 6 sind durch eine Bewegung des Kühlmoduls 1 in Richtung X auseinander bewegt worden, sodass die Vorfixierung aufgehoben ist. Das Kühlmodul 1 hat nunmehr gegenüber dem Motor 4 einen vergrößerten Abstand X2, welcher dem vorgeschriebenen Sicherheitsabstand entspricht, der beim Betrieb des Kraftfahrzeuges einzuhalten ist. Das Kühlmodul 1 ist gegenüber dem Montageträger 9 in X-Richtung fixiert, wobei die Fixierung in negativer X-Richtung (entgegen der Fahrtrichtung) kraftschlüssig durch eine Verspannung der elastomeren Befestigungselemente 7, 12 erfolgt. Der Längszapfen 10 hintergreift mit einer Ringwulst 10b die Buchse 7, und der Wulst 8c des Kulissenlagers 8 hält die eingespannte Buchse 12 zurück. Diese kraftschlüssige Verbindung ist so ausgelegt, dass das Kühlmodul 1 bei einem Frontalstoß in Fahrtrichtung ausweichen kann, indem es sich aus seinen Lagern löst und damit relativ unbeschädigt bleibt.

Die Befestigungselemente 10, 11 am Montageträger 9 und die Befestigungselemente 7, 8 im Kühlmodul 1 weisen unterschiedliche senkrechte (in Z-Richtung) Lagerabstände auf, wodurch eine Verspannung der elastomeren Elemente 7, 12 erreicht wird - das Kühlmodul 1 sitzt damit fest und spielfrei im Montageträger 9.

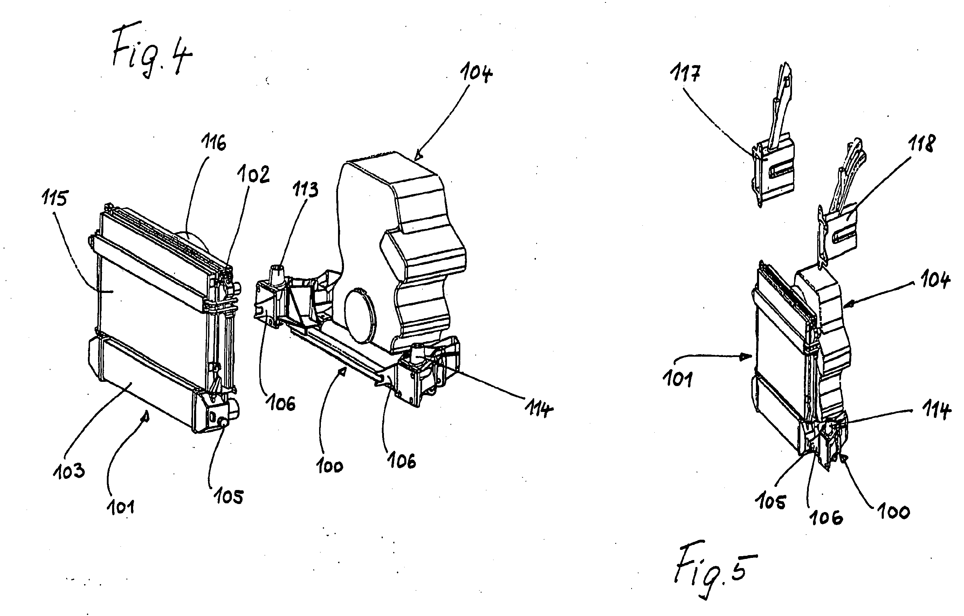

**Fig. 4** zeigt eine perspektivische Darstellung eines Unterrahmens 100 (auch Fahrschemel genannt), auf welchem eine als Verbrennungsmotor ausgebildete Antriebsmaschine 104, im Folgenden auch Motor genannt, elastisch und schwingungsdämpfend abgestützt ist. Für gleiche in den Figuren 1 bis 3 schematisch dargestellte Teile werden im Folgenden die gleichen, jedoch um Hundert erhöhten Bezugszahlen verwendet. Am Unterrahmen 100 sind Vorfixierelemente 106 befestigt, die als gabelförmige Aufnahmeelemente ausgebildet sind. Der Unterrahmen 100 weist ferner zwei Befestigungszapfen 113, 114 auf, über welche der Unterrahmen 100 mit dem hier nicht dargestellten Fahrzeugrahmen (Hauptrahmen) verbunden wird. Das Kühlmodul 101 ist separat in einer Position vor der Montage dargestellt und besteht vereinfacht im Wesentlichen aus einem mittleren Kühlmittelkühler 102, einem darunter angeordneten Ladeluftkühler 103, einem in Fahrtrichtung davor angeordneten Kältemittelkondensator oder Gaskühler 115 sowie einem in Fahrtrichtung hinter dem Kühlmittelkühler 102 angeordneten (nur teilweise sichtbaren) Lüfteraggregat 116 (Luftfördereinrichtung). Die Kühlkomponenten 102, 103, 115, 116 sind untereinander zu einer Baueinheit 101 verbunden. Am unten gelegenen Ladeluftkühler 103 ist seitlich ein Vorfixierelement 105 in Form eines Zapfens angeordnet, welcher in das Vorfixierelement 106 am Unterrahmen 100 eingreift.

**Fig. 5** zeigt das Kühlmodul 101 in seiner vorfixierten Position, d. h. der so genannten Vorposition. Dabei greifen die seitlichen Zapfen 105 in die gabelförmigen Aufnahmeelemente 106 am Unterrahmen 100 ein. Das Kühlmodul 101 befindet sich in dieser Vorposition in unmittelbaren Nähe des Motors 104 und ist darüber hinaus im Hinblick auf die Fluidanschlüsse der Wärmeübertrager 102, 103 gut zugänglich. In dieser Vorposition erfolgt die nicht dargestellte Verschlauchung, d. h. der Anschluss von Schläuchen für Kühlmittel, Ladeluft und/oder Öl. Anschließend an den Montagevorgang Verschlauchung erfolgt die so genannte Hochzeit, bei welcher die nicht dargestellten oberen und unteren Baugruppen des Kraftfahrzeuges miteinander verbunden werden. Von der oberen Baugruppe, d. h. der Karosserie einschließlich Fahrzeugrahmen sind lediglich die Enden von Längsträgern 117, 118 dargestellt. Der Unterrahmen 100 wird über die Zapfen 113, 114 (Fig. 4) mit den Längsträgern 117, 118 verbunden.

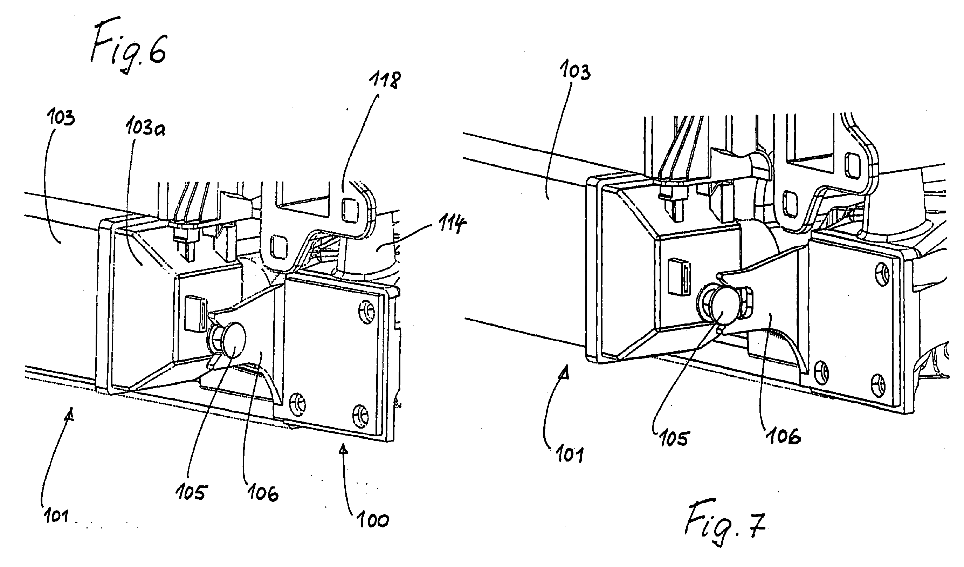

**Fig. 6** zeigt einen unteren Eckausschnitt des Kühlmoduls 101 und des Unterrahmens 100, der über den Zapfen 114 mit dem Längsträger 118 verbunden ist. Das Kühlmodul 101 befindet sich noch in seiner Vorposition, d. h. das zapfenförmige Vorfixierelement 105 ist in dem gabelförmigen Vorfixierelement 106 eingerastet. Der Ladeluftkühler 103 weist einen Sammelkasten 103a auf, an welchem der Zapfen 105 befestigt ist.

**Fig. 7** zeigt den gleichen Ausschnitt wie in Fig. 6, jedoch ist das Kühlmodul 101 respektive der Ladeluftkühler 103 mit seinem Zapfen 105 aus der Vorposition in Fahrtrichtung ausgerückt.

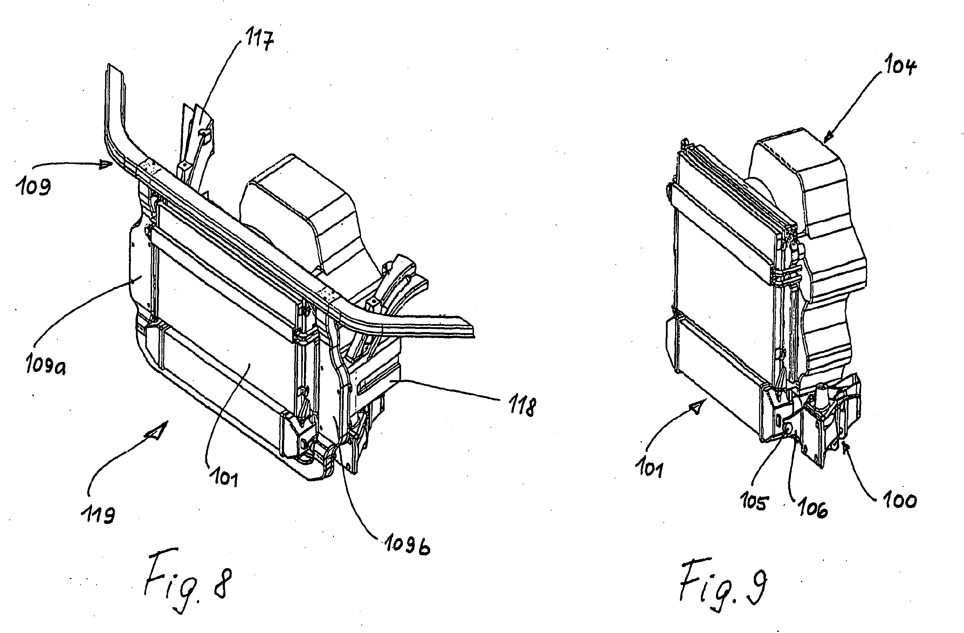

**Fig. 8** zeigt eine Gesamtansicht eines Frontendmoduls 119, welches im Wesentlichen aus dem Montageträger 109 und Kühlmodul 101 besteht - die meist auch zum Umfang eines Frontendmoduls gehörenden Scheinwerfer sind hier nicht dargestellt. Das Frontendmodul 119 ist über die beiden Seitenteile 109a, 109b des Montageträgers 109 mit den Längsträgern 117, 118 verbunden.

**Fig. 9** zeigt (ähnlich wie Fig. 5, jedoch vergrößert) das Kühlmodul 101 in Vorposition, d. h. mit eingerasteten Vorfixierelementen 105, 106 und den Motor 104 auf dem Unterrahmen 100.

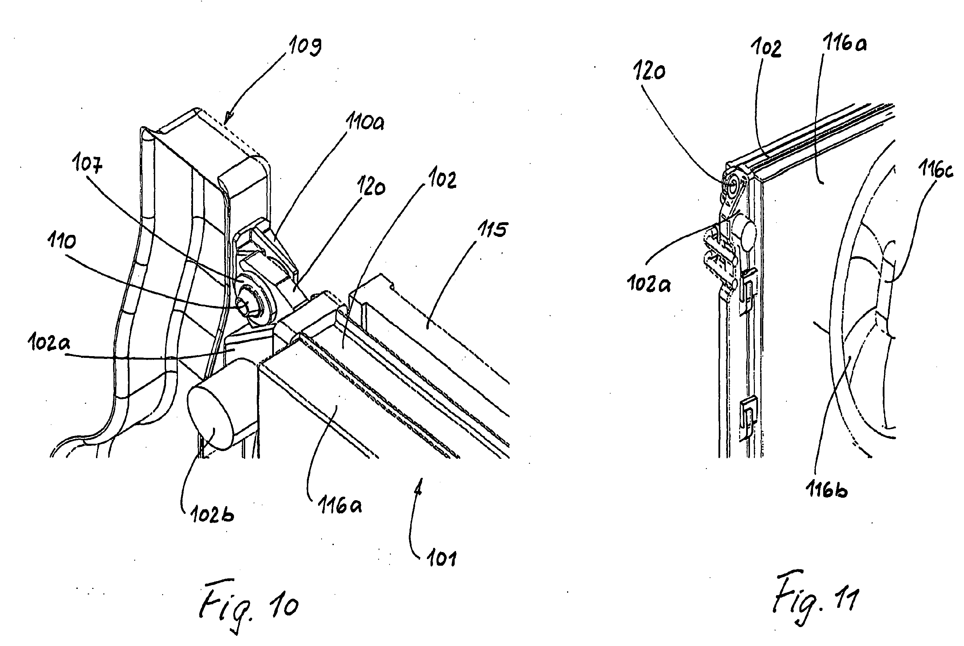

**Fig. 10** zeigt einen oberen Eckausschnitt des Kühlmoduls 101, bestehend aus mittlerem Kühlmittelkühler 102, frontseitig angeordnetem Kondensator oder Gaskühler 115 und abströmseitig angeordnetem Lüfteraggregat 116, von dem hier nur eine Lüfterhaube 116a sichtbar ist. Das Kühlmodul 101 ist über Befestigungselemente 110, 107 mit dem Montageträger 109 verbunden. Das Befestigungselement 110 ist als Zapfen ausgebildet, welcher über einen Sockel 110a mit dem Montageträger 109 verbunden ist. Das Befestigungselement 107 ist als Elastomerbuchse ausgebildet, welche in einem Auge 120 aufgenommen ist, welches an einem Sammelkasten 102a des Kühlmittelkühlers 102 befestigt, vorzugsweise angespritzt ist. Am Sammelkasten 102a ist ein Kühlmittelstutzen 102b angeordnet, an welchen im Zuge der Verschlauchung ein nicht dargestellter Kühlmittelschlauch angeschlossen wird. Der Kühlmittelkühler 102 ist auf ähnliche oder gleiche Weise auf der nicht dargestellten gegenüberliegenden Seite mit dem Montageträger 109 verbunden.

**Fig. 11** zeigt einen etwas größeren Ausschnitt als in Fig. 10 mit Blick auf die Lüfterhaube 116a sowie auf einen Axiallüfter 116b mit Elektromotor 116c als Lüfterantrieb. Die Komponenten 116a, 116b, 116c bilden die Lüftfördereinrichtung bzw. das Lüfteraggregat 116, welches über die Lüfterhaube 116a am Kühlmittelkühler 102 befestigt ist, der somit als Träger des gesamten Kühlmoduls 101 gegenüber dem Montageträger 109 fungiert. Grundsätzlich ist es jedoch auch möglich, dass die Lüfterhaube 116a diese Trägerfunktion für das Kühlmodul 101 übernehmen kann. Der Kühlmittelkasten 102a ist vorzugsweise aus Kunststoff hergestellt, sodass das Auge 120 an den Kühlmittelkasten 102a angespritzt werden kann - ebenso wie weitere Befestigungselemente (nicht mit Bezugszahlen versehen) zur Halterung des Lüfteraggregates 116.

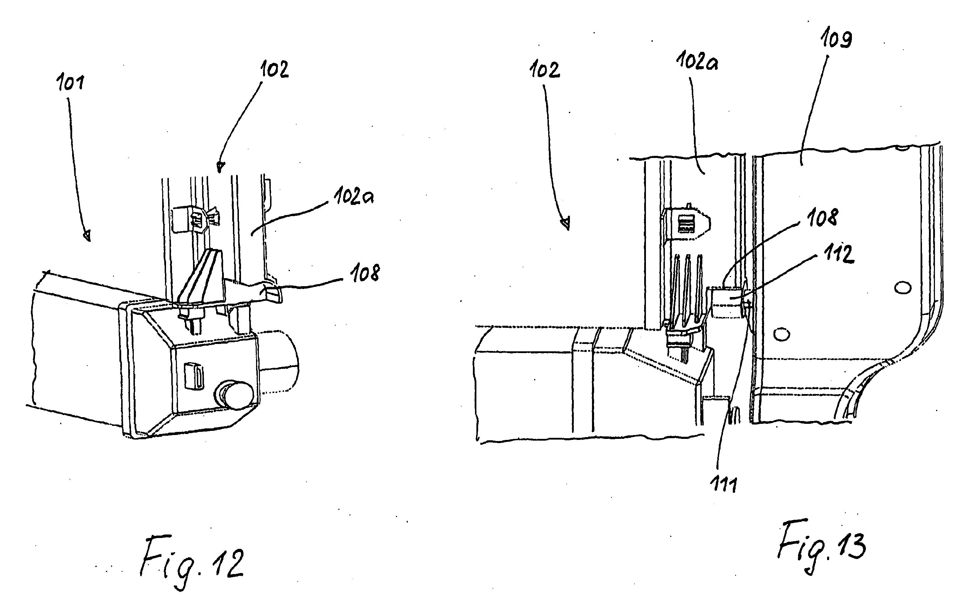

**Fig. 12** zeigt einen unteren Eckausschnitt des Kühlmoduls 101 mit Kühlmittelkühler 102, welcher in seinem unteren Bereich ein in den Kühlmittelkasten 102a eingeformtes Kulissenlager 108 aufweist. Die Kontur des Kulissenlagers 108 entspricht der in Fig. 1 und 2 dargestellten Kontur 8a, 8b, 8c.

**Fig. 13** zeigt den gleichen Ausschnitt wie in Fig. 12, jedoch gedreht und mit Montageträger 109, an welchem ein als Querzapfen 111 ausgebildetes Befestigungselement mit einer Elastomerbuchse 112 angeordnet ist. Der Querzapfen 111 mit Elastomerbuchse 112 wird von dem Kulissenlager 108 aufgenommen und trägt somit den Kühlmittelkühler 102 und damit auch das Kühlmodul 101.

Die Befestigungselemente 107, 108, 110, 111, 112, 120 am Montageträger 109 und am Kühlmodul 101 sind derart ausgebildet, dass das Kühlmodul 101 bei einem Frontalstoß auf das Kraftfahrzeug entgegen der Fahrtrichtung ausweichen kann, indem es von den kraftschlüssig ausgebildeten Lagern freigegeben wird.

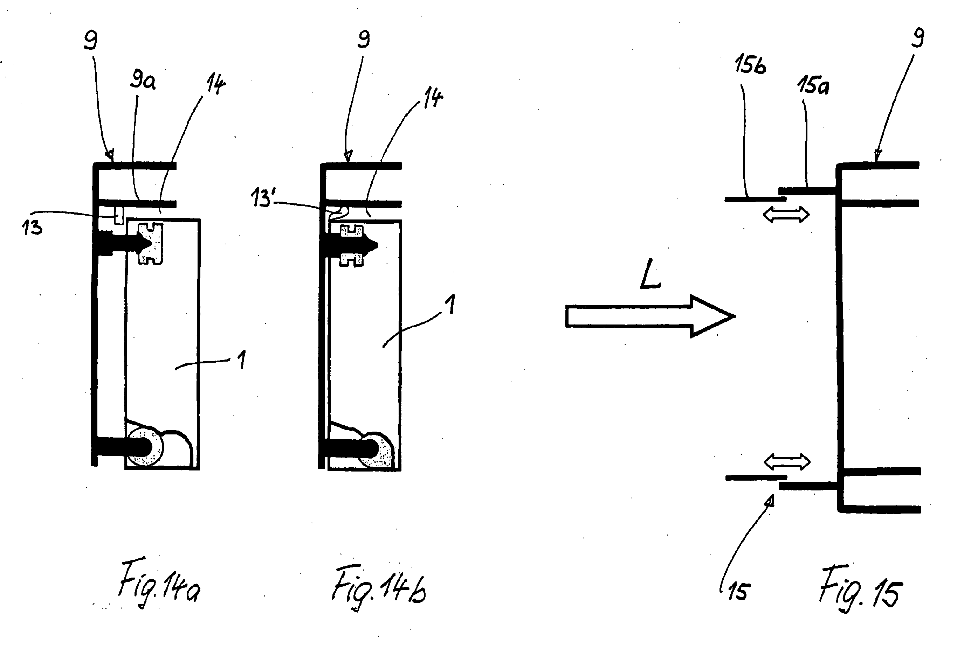

**Fig. 14a** und **14b** zeigen eine weitere Ausgestaltung der Erfindung in Form einer flexiblen Dichtlippe 13, welche auf der Innenseite des Montageträgers 9 angeordnet ist und einen Spalt 14 zwischen Kühlmodul 1 und Montageträger 9 abdichtet. Die Dichtlippe 13 kann vorzugsweise an den Montageträger 9 angespritzt sein und ist als umlaufender flexibler Dichtstreifen ausgebildet. Beim Einsetzen des Kühlmoduls 1 in den Montageträger 9 wird die Dichtung 13 umgelegt und nimmt die in Fig. 14b mit 13' bezeichnete Form an. Dabei übt die Dichtung 13' mit ihrer Dichtlippe einen Anpressdruck auf das Kühlmodul 1 aus, welcher die erforderliche Dichtung des Spaltes 14 bewirkt.

**Fig. 15** zeigt eine weitere Ausgestaltung der Erfindung in Form einer Luftführung 15, welche auf der Frontseite des Montageträger 9 angeordnet ist - die Strömungsrichtung der Luft ist durch einen Pfeil L gekennzeichnet. Die Luftführung 15 besteht aus zwei teleskopartig ineinander schiebbaren Teilen 15a, 15b, wobei der Teil 15a am Montageträger 9 befestigt ist, und einem weiteren Teil 15b, welches fahrzeugseitig (nicht dargestellt) befestigt ist. Relativbewegungen oder Toleranzen können somit durch den Schiebesitz beider Teile ausgeglichen werden. Durch die Luftführung 15 wird ein geschlossener Kanal vom nicht dargestellten Kühlergrill bis zum Kühlmodul innerhalb des Montageträgers 9 geschaffen. Durch die teleskopartige Ausbildung der Luftführung wird auch ein günstiges Crashverhalten erzielt. Die Teile 15a, 15b der Luftführung 15 können aus einem Schaummaterial, insbesondere einem Kunststoffschaum hergestellt werden - dadurch ergeben sich eine Gewichtsreduzierung und ein verbessertes Crashverhalten.

In den oben beschriebenen Ausführungsbeispielen sind die Vorfixierelemente 6, 106 am Unterrahmen 100, der ein Teil des Fahrzeuges ist, befestigt. Abweichend hiervor können diese Vorfixierelemente auch an einem nicht fahrzeugseitigen Teil, nämlich an einer der Montage dienenden Fördereinrichtung, insbesondere einer nicht dargestellten Förderplattform angeordnet sein. Im Rahmen einer Fließbandfertigung des Fahrzeuges ist es üblich, dass die oberen und die unteren Baugruppen des Fahrzeuges, also Karosserie und Fahrgestell, auf einer solchen Förderplattform montiert werden. Die oben beschriebenen gabelförmigen Vorfixierelemente 6, 106 wären also an der Förderplattform befestigt, während die korrespondierenden Vorfixierelemente am Kühlmodul bleiben. Der Vorteil besteht darin, dass das Gewicht des Fahrzeuges um das Gewicht der Vorfixierelemente, die an der Förderplattform verbleiben, reduziert wird.

Ergänzend zu dem oben beschriebenen und in den Zeichnungen dargestellten Montageverfahren ist auch ein alternatives Verfahren denkbar, um das Kühlmodul (die Baueinheit) in dem Tragrahmen respektive Montageträger eines Frontendmoduls zu befestigen und zu lagern. Hierbei entfallen die Vorfixierung und die Vorfixierelemente der aus Kühlkomponenten bestehenden Baueinheit auf dem Motorträger (Unterrahmen) sowie die anschließende Verschlauchung. Die Verbindung des Motorträgers (Unterrahmen) mit der Karosserie (Oberrahmen oder auch Fahrzeugrahmen genannt) erfolgt ohne die Kühlkomponenten. Räumlich und/oder zeitlich getrennt erfolgt der Zusammenbau des Frontendmoduls. Als ein Arbeitsgang hierbei erfolgt die Montage der Baueinheit in den Tragrahmen bzw. den Montageträger des Frontendmoduls. Dann wird das komplette Frontendmodul, d. h. mit integriertem Kühlmodul (Baueinheit) am Fahrzeug, vorzugsweise an den Längsträgerenden befestigt. Anschließend erfolgt die Verschlauchung der Wärmeübertrager. Der Vorteil dieses alternativen Verfahrens liegt darin, dass die Montage eines vormontierten Frontendmoduls vereinfacht ist und dass auf die oben beschriebenen Vorfixierelemente verzichtet werden kann. Dafür kann eine eventuell erschwerte Zugänglichkeit der Wärmeübertrager bei der Verschlauchung in Kauf genommen werden.

Die Erfindung kann im Zusammenhang mit einem Frontendmodul eines Kraftfahrzeugs Anwendung finden oder mit einem in einem so genannten Radhausmodul, bei welchem wie bei einem Frontendmodul das Radhaus mit dazugehörigem Kühler oder Kühlmodul als Modulare Einheit am Fahrzeug verbaut wird. Dabei kann an dem Fahrzeug vorzugsweise ein Frontendmodul oder es kann auch ein Radhausmodul oder es können auch mehrere Radhausmodule verbaut werden, wie beispielsweise im Bereich beider vorderer Kotflügel des Fahrzeugs, auch in Kombination mit einem Frontendmodul.

Die erfindungsgemäße Vorrichtung und das erfindungsgemäße Verfahren kann eingesetzt werden insbesondere für Kühlmodule beispielsweise für Fahrzeuge mit Brennkraftmaschinen oder mit zumindest einem Elektroantrieb oder mit Hybridantrieb mit Elektromotor und Brennkraftmaschine.

## Patentansprüche

1. Verfahren zum Einbau einer Kühlkomponenten (2, 3, 102, 103, 115) sowie insbesondere Luftförder- und/oder Regeleinrichtungen (116) umfassenden Baueinheit (1, 101) in ein Kraftfahrzeug, welches eine Antriebsmaschine (4, 104), einen Fahrzeugrahmen (117, 118) und einen Unterrahmen (100) aufweist, der am Fahrzeugrahmen (117, 118) befestigt wird und insbesondere als Träger der Antriebsmaschine (4, 104) dient, wobei die Baueinheit (1, 101) in einem Tragrahmen (9, 109) , vorzugsweise einem Montageträger eines Frontendmoduls aufnehmbar ist, wobei das Verfahren folgende nacheinander ablaufende Verfahrensschritte aufweist:
a) Vorfixieren der Baueinheit (1, 101) gegenüber dem Unterrahmen (100) durch Einrücken in eine Vorposition,
b) Anschließen der Kühlkomponenten (102, 103) an mit der Antriebsmaschine (104) verbundene Kreisläufe, insbesondere durch Schläuche und Leitungen,
c) Verbinden des Fahrzeugrahmens (117, 118) mit dem Unterrahmen (100),
d) Verbinden des Tragrahmens respektive des Montageträgers (9, 109) mit dem Fahrzeugrahmen (117, 118) und
e) Verschieben der Baueinheit (1, 101) aus der Vorposition in eine Endposition innerhalb des Tragrahmens (9, 109) respektive des Montageträgers.

2. Verfahren nach Anspruch 1, **dadurch gekennzeichnet, dass** die Vorfixierung durch eine Verschiebung der Baueinheit (1, 101) entgegen der Fahrtrichtung des Kraftfahrzeuges und die Verschiebung aus der Vorposition in die Endposition in Fahrtrichtung des Kraftfahrzeuges erfolgen.

3. Verfahren nach Anspruch 2, **dadurch gekennzeichnet, dass** bei der Verschiebung aus der Vorposition in die Endposition ein Verschiebeweg (X2) zurückgelegt wird, der einem im Betrieb des Kraftfahrzeuges einzuhaltenden Sicherheitsabstand entspricht.

4. Verfahren nach Anspruch 1, 2 oder 3, **dadurch gekennzeichnet, dass** die Baueinheit (1, 101) beim Verschieben aus der Vorposition in die Endposition im Tragrahmen (9, 109) respektive im Montageträger zentriert und anschließend am Tragrahmen (9, 109) befestigt wird.

5. Verfahren nach einem der Ansprüche 1 bis 4, **dadurch gekennzeichnet, dass** die Baueinheit (1, 101) gegenüber dem Tragrahmen (9, 109) respektive Montageträger elastisch verspannt wird.

6. Vorrichtung zur Durchführung des Verfahrens nach mindestens einem der Ansprüche 1 bis 5, umfassend eine Kühlkomponenten (102, 103, 115) sowie insbesondere Luftförder- und/oder Regeleinrichtungen (116) umfassende Baueinheit (101), einen Tragrahmen (109) respektive einen Montageträger eines Frontendmoduls, einen Fahrzeugrahmen (117, 118) und einen als Träger einer Antriebsmaschine (104) dienenden, an dem Tragrahmen zu befestigenden Unterrahmen (100) eines Kraftfahrzeuges, wobei die Baueinheit (101) und der Unterrahmen (100) korrespondierende Vorfixierelemente (105, 106) aufweisen, die entgegen der Fahrtrichtung fügbar sind.

7. Vorrichtung zur Durchführung des Verfahrens nach mindestens einem der Ansprüche 1 bis 5, umfassend eine Kühlkomponenten (102, 103, 115) sowie insbesondere Luftförder- und/oder Regeleinrichtungen (116) umfassende Baueinheit (101), einen Tragrahmen (109) respektive einen Montageträger eines Frontendmoduls, einen Fahrzeugrahmen (117, 118), einen als Träger einer Antriebsmaschine (104) dienenden, an, dem Tragrahmen zu befestigenden. Unterrahmen (100) eines Kraftfahrzeuges und eine nicht fahrzeugseitige der Montage dienende Fördereinrichtung, wobei die Baueinheit(101) und die Fördereinrichtung korrespondierende Vorfixierelemente (105) aufweisen, die entgegen der Fahrtrichtung fügbar sind.

8. Vorrichtung nach Anspruch 6 oder 7, **dadurch gekennzeichnet, dass** die Baueinheit (101) und der Tragrahmen (109) respektive der Montageträger korrespondierende Befestigungselemente (107, 120, 110, 110a, 108, 111, 112) aufweisen, die in Fahrtrichtung fügbar sind.

9. Vorrichtung nach Anspruch 6 oder 7, **dadurch gekennzeichnet, dass** die Vorfixierelemente als gabelförmige Aufnahmeelemente (106) und als Zapfen (105) ausgebildet sind.

10. Vorrichtung nach Anspruch 9, **dadurch gekennzeichnet, dass** zwei Aufnahmeelemente (106) am Unterrahmen (100) und zwei Zapfen (105) an der Baueinheit (101) angeordnet sind.

11. Vorrichtung nach Anspruch 9 oder 10, **dadurch gekennzeichnet, dass** die Zapfen (105) quer zur Fahrtrichtung angeordnet sind.

12. Vorrichtung nach einem der Ansprüche 6 bis 11, **dadurch gekennzeichnet, dass** die Zapfen (105) in den Aufnahmeelementen (106) einrastbar sind.

13. Vorrichtung nach einem der Ansprüche 8 bis 12, **dadurch gekennzeichnet, dass** die korrespondierenden Befestigungselemente jeweils ein elastisches Element (7, 12, 107, 112), vorzugsweise ein Elastomerelement aufweisen.

14. Vorrichtung nach einem der Ansprüche 8 bis 13, **dadurch gekennzeichnet, dass** mindestens ein Befestigungselement als Längslagerzapfen (10, 110) ausgebildet ist, dessen Längsachse sich in Fahrtrichtung erstreckt.

15. Vorrichtung nach Anspruch 14, **dadurch gekennzeichnet, dass** mindestens ein Befestigungselement als Auge (120) ausgebildet ist, welches den Längslagerzapfen (110) aufnimmt.

16. Vorrichtung nach Anspruch 14 oder 15, **dadurch gekennzeichnet, dass** das elastische Element als Buchse (107) ausgebildet ist, welche auf dem Längslagerzapfen (110) angeordnet ist.

17. Vorrichtung nach Anspruch 14, 15 oder 16, **dadurch gekennzeichnet, dass** der mindestens eine Längslagerzapfen (110) am Tragrahmen (109) respektive Montageträger und das mindestens eine Auge (120) an der Baueinheit (101) angeordnet sind.

18. Vorrichtung nach mindestens einem der Ansprüche 8 bis 17, **dadurch gekennzeichnet dass** mindestens ein Befestigungselement als Querlagerzapfen (111) ausgebildet ist, dessen Längsachse sich quer zur Fahrtrichtung erstreckt.

19. Vorrichtung nach Anspruch 18. **dadurch gekennzeichnet, dass** das elastische Element als auf dem Querlagerzapfen (111) angeordnete Buchse (112) ausgebildet ist.

20. Vorrichtung nach Anspruch 18 oder 19, **dadurch gekennzeichnet, dass** mindestens ein Befestigungselement als Kulissenlager (108) ausgebildet ist, welches den Querlagerzapfen (111) mit elastischer Buchse (112) aufnimmt.

21. Vorrichtung nach Anspruch 20, **dadurch gekennzeichnet, dass** das Kulissenlager (8, 108) eine Einführschräge (8a) und eine Aufnahmeöffnung (8b) für den Querlagerzapfen (11, 111) aufweist.

22. Vorrichtung nach Anspruch 21, **dadurch gekennzeichnet, dass** zwischen der Einführschräge (8a) und der Aufnahmeöffnung (8b) ein wulstförmiges Rückhalteelement (8c) angeordnet ist.

23. Vorrichtung nach mindestens einem der Ansprüche 8 bis 22, **dadurch gekennzeichnet, dass** die Befestigungselemente (10, 11, 110, 111) am Tragrahmen (9, 109) respektive Montageträger einen ersten senkrechten Lagerabstand sowie die Befestigungselemente (7, 8, 107, 108) an der Baueinheit (1, 101) einen zweiten senkrechten Lagerabstand aufweisen und dass die Lagerabstände zur Erzielung einer elastischen Verspannung unterschiedlich ausgebildet sind.

24. Vorrichtung nach mindestens einem der Ansprüche 6 bis 23, **dadurch gekennzeichnet, dass** die Baueinheit (101) Wärmeübertrager (102, 103) mit Sammelkästen (102a, 103a), insbesondere aus Kunststoff aufweist und dass die Vorfixier- und die Befestigungselemente (105, 120) an den Sammelkästen (102a, 103a) angeordnet, insbesondere angespritzt sind.

25. Vorrichtung nach mindestens einem der Ansprüche 6 bis 24, **dadurch gekennzeichnet, dass** die Verbindung zwischen Baueinheit (1, 101) und Tragrahmen (9, 109) respektive Montageträger durch die Befestigungselemente (8, 108) - entgegen der Fahrtrichtung - lösbar ausgebildet ist.

26. Vorrichtung nach mindestens einem der Ansprüche 6 bis 25, **dadurch gekennzeichnet, dass** am Tragrahmen (9, 9a) respektive Montageträger ein vorzugsweise umlaufendes Dichtelement (13) zur Abdichtung eines Spaltes (14) zwischen Tragrahmen (9, 9a) respektive Montageträger und Baueinheit (1) angeordnet, vorzugsweise angespritzt ist.

27. Vorrichtung nach mindestens einem der Ansprüche 6 bis 26, **dadurch gekennzeichnet, dass** am Tragrahmen (9) respektive Montageträger frontseitig eine umlaufende, teleskopierbare Luftführung (15, 15a) angeordnet ist.

28. Vorrichtung nach Anspruch 27, **dadurch gekennzeichnet, dass** die Luftführung ein- oder mehrteilig ausgebildet ist und aus einem Schaummaterial besteht.

## Claims

1. Method for installing a structural unit (1, 101) comprising cooling components (2, 3, 102, 103, 115) and, in particular, air-conveying and/or regulating devices (116) into a motor vehicle which has an engine (4, 104), a vehicle frame (117, 118) and a subframe (100) which is fastened to the vehicle frame (117, 118) and which, in particular, serves as a bearer of the engine (4, 104), the structural unit (1, 101) being receivable in a carrying frame (9, 109), preferably a mounting bearer of a front end module, the method having the following method steps proceeding in succession:
a) prefixing of the structural unit (1, 101) with respect to the subframe (100) by means of engagement into a preposition,
b) connection of the cooling components (102, 103) to circuits connected to the engine (104), in particular by means of hoses and lines,
c) connection of the vehicle frame (117, 118) to the subframe (100),
d) connection of the carrying frame or of the mounting bearer (9, 109) to the vehicle frame (117, 118), and
e) displacement of the structural unit (1, 101) out of the preposition into a final position within the carrying frame (9, 109) or the mounting bearer.

2. Method according to Claim 1, **characterized in that** the prefixing takes place by means of a displacement of the structural unit (1, 101) opposite to the direction of travel of the motor vehicle and the displacement out of the preposition into the final position takes place in the direction of travel of the motor vehicle.

3. Method according to Claim 2, **characterized in that**, during the displacement out of the preposition into the final position, a displacement distance (X2) is covered which corresponds to a safety clearance to be maintained when the motor vehicle is in operation.

4. Method according to Claim 1, 2 or 3, **characterized in that**, during displacement out of the preposition into the final position in the carrying frame (9, 109) or in the mounting bearer, the structural unit (1, 101) is centred and is subsequently fastened to the carrying frame (9, 109).

5. Method according to one of Claims 1 to 4, **characterized in that** the structural unit (1, 101) is braced elastically with respect to the carrying frame (9, 109) or mounting bearer.

6. Apparatus for carrying out the method according to at least one of Claims 1 to 5, comprising a structural unit (101) comprising cooling components (102, 103, 115) and, in particular, air-conveying and/or regulating devices (116), a carrying frame (109) or a mounting bearer of a front end module, a vehicle frame (117, 118) and a motor vehicle subframe (100) serving as a bearer of an engine (104) and to be fastened to the carrying frame, the structural unit (101) and the subframe (100) having matching prefixing elements (105, 106) which can be assembled opposite to the direction of travel.

7. Apparatus for carrying out the method according to at least one of Claims 1 to 5, comprising a structural unit (101) comprising cooling components (102, 103, 115) and, in particular, air-conveying and/or regulating devices (116), a carrying frame (109) or a mounting bearer of a front end module, a vehicle frame (117, 118), a motor vehicle subframe (100) serving as a bearer of an engine (104) and to be fastened to the carrying frame, and a conveying device located on the non-vehicle side and serving for mounting, the structural unit (101) and the conveying device having matching prefixing elements (105) which can be assembled opposite to the direction of travel.

8. Apparatus according to Claim 6 or 7, **characterized in that** the structural unit (101) and the carrying frame (109) or the mounting bearer have matching fastening elements (107, 120, 110, 110a, 108, 111, 112) which can be assembled in the direction of travel.

9. Apparatus according to Claim 6 or 7, **characterized in that** the prefixing elements are designed as forkshaped reception elements (106) and tenons (105).

10. Apparatus according to Claim 9, **characterized in that** two reception elements (106) are arranged on the subframe (100) and two tenons (105) are arranged on the structural unit (101).

11. Apparatus according to Claim 9 or 10, **characterized in that** the tenons (105) are arranged transversely with respect to the direction of travel.

12. Apparatus according to one of Claims 6 to 11, **characterized in that** the tenons (105) can be latched in the reception elements (106).

13. Apparatus according to one of Claims 8 to 12, **characterized in that** the matching fastening elements have in each case an elastic element (7, 12, 107, 112), preferably an elastomeric element.

14. Apparatus according to one of Claims 8 to 13, **characterized in that** at least one fastening element is designed as a longitudinal bearing journal (10, 110), the longitudinal axis of which extends in the direction of travel.

15. Apparatus according to Claim 14, **characterized in that** at least one fastening element is designed as a lug (120) which receives the longitudinal bearing journal (110).

16. Apparatus according to Claim 14 or 15, **characterized in that** the elastic element is designed as a bush (107) which is arranged on the longitudinal bearing journal (110).

17. Apparatus according to Claim 14, 15 or 16, **characterized in that** the at least one longitudinal bearing journal (110) is arranged on the carrying frame (109) or mounting bearer and the at least one lug (120) is arranged on the structural unit (101).

18. Apparatus according to at least one of Claims 8 to 17, **characterized in that** at least one fastening element is designed as a transverse bearing journal (111), the longitudinal axis of which extends transversely with respect to the direction of travel.

19. Apparatus according to Claim 18, **characterized in that** the elastic element is designed as a bush (112) arranged on the transverse bearing journal (111).

20. Apparatus according to Claim 18 or 19, **characterized in that** at least one fastening element is designed as a link bearing (108) which receives the transverse bearing journal (111) by means of an elastic bush (112).

21. Apparatus according to Claim 20, **characterized in that** the link bearing (8, 108) has an introduction slope (8a) and a reception orifice (8b) for the transverse bearing journal (11, 111).

22. Apparatus according to Claim 21, **characterized in that** a bead-shaped retention element (8c) is arranged between the introduction slope (8a) and the reception orifice (8b).

23. Apparatus according to at least one of Claims 8 to 22, **characterized in that** the fastening elements (10, 11, 110, 111) on the carrying frame (9, 109) or mounting bearer have a first vertical bearing clearance and the fastening elements (7, 8, 107, 108) on the structural unit (1, 101) have a second vertical bearing clearance, and **in that** the bearing clearances are designed differently in order to achieve elastic bracing.

24. Apparatus according to at least one of Claims 6 to 23, **characterized in that** the structural unit (101) has heat exchangers (102, 103) with headers (102a, 103a), in particular made from plastic, and **in that** the prefixing and fastening elements (105, 120) are arranged, in particular injection-moulded, on the headers (102a, 103a).

25. Apparatus according to at least one of Claims 6 to 24, **characterized in that** the connection between the structural unit (1, 101) and carrying frame (9, 109) or mounting bearer by means of the fastening elements (8, 108) is designed to be releasable opposite to the direction of travel.

26. Apparatus according to at least one of Claims 6 to 25, **characterized in that** a preferably continuous sealing element (13) for sealing off a gap (14) between the carrying frame (9, 9a) or mounting bearer and the structural unit (1) is arranged, preferably injection-moulded, on the carrying frame (9, 9a) or mounting bearer.

27. Apparatus according to at least one of Claims 6 to 26, **characterized in that** a continuous telescopic air guide (15, 15a) is arranged at the front on the carrying frame (9) or mounting bearer.

28. Apparatus according to Claim 27, **characterized in that** the air guide is of one-part or multi-part design and consists of a foam material.

## Revendications

1. Procédé de montage d'une unité constructive (1, 101) comprenant des composants de refroidissement (2, 3, 102, 103, 115) ainsi que notamment des dispositifs de transport d'air et/ou de régulation (116), dans un véhicule automobile, qui présente un moteur d'entraînement (4, 104), un châssis de véhicule (117, 118) et un sous-châssis (100), qui est fixé sur le châssis de véhicule (117, 118) et qui sert notamment de support pour le moteur d'entraînement (4, 104), l'unité constructive (1, 101) pouvant être reçue dans un châssis porteur (9, 109), de préférence un support de montage d'un module d'extrémité avant, le procédé présentant les étapes de procédé successives suivantes :
a) préfixation de l'unité constructive (1, 101) par rapport au sous-châssis (100) par embrayage dans une position initiale,
b) raccordement des composants de refroidissement (102, 103) à des circuits connectés au moteur d'entraînement (104), notamment par des tuyaux et des conduites,
c) connexion du châssis du véhicule (117, 118) au sous-châssis (100),
d) connexion du châssis porteur, respectivement du support de montage (9, 109) au châssis de véhicule (117, 118) et
e) déplacement de l'unité constructive (1, 101) de la position initiale dans une position finale à l'intérieur du châssis porteur (9, 109) respectivement du support de montage.

2. Procédé selon la revendication 1, **caractérisé en ce que** la préfixation s'effectue par un déplacement de l'unité constructive (1, 101) à l'encontre de la direction de conduite du véhicule automobile et le déplacement hors de la position initiale dans la position finale s'effectue dans la direction de conduite du véhicule automobile.

3. Procédé selon la revendication 2, **caractérisé en ce que** lors du déplacement de la position initiale dans la position finale, une course de déplacement (X2) est parcourue, laquelle correspond à une distance de sécurité à respecter pendant le fonctionnement du véhicule automobile.

4. Procédé selon la revendication 1, 2 ou 3, **caractérisé en ce que** l'unité constructive (1, 101), lors du déplacement de la position initiale dans la position finale, est centrée dans le châssis porteur (9, 109) respectivement dans le support de montage, et est ensuite fixée sur le châssis porteur (9, 109).

5. Procédé selon l'une quelconque des revendications 1 à 4, **caractérisé en ce que** l'unité constructive (1, 101) est serrée élastiquement par rapport au châssis porteur (9, 109) respectivement au support de montage.

6. Dispositif pour mettre en oeuvre le procédé selon au moins l'une quelconque des revendications 1 à 5, comprenant une unité constructive (101) comprenant des composants de refroidissement (102, 103, 115) ainsi que notamment des dispositifs de transport d'air et/ou de régulation (116), un châssis porteur (109) respectivement un support de montage d'un module d'extrémité avant, un châssis de véhicule (117, 118) et un sous-châssis (100) d'un véhicule automobile, qui sert de support pour un moteur d'entraînement (104) et qui doit être fixé sur le châssis porteur, l'unité constructive (101) et le sous-châssis (100) présentant des éléments de préfixation (105, 106) correspondants, qui peuvent être assemblés à l'encontre de la direction de conduite.

7. Dispositif pour mettre en oeuvre le procédé selon au moins l'une quelconque des revendications 1 à 5, comprenant une unité constructive (101) comprenant des composants de refroidissement (102, 103, 115) ainsi que notamment des dispositifs de transport d'air et/ou de régulation (116), un châssis porteur (109) respectivement un support de montage d'un module d'extrémité avant, un châssis de véhicule (117, 118), un sous-châssis (100) d'un véhicule automobile, qui sert de support pour un moteur d'entraînement (104) et qui doit être fixé sur le châssis porteur, et un dispositif de transport servant au montage, non disposé du côté du véhicule, l'unité constructive (101) et le dispositif de transport présentant des éléments de préfixation (105) correspondants, qui peuvent être assemblés à l'encontre de la direction de conduite.

8. Dispositif selon la revendication 6 ou 7, **caractérisé en ce que** l'unité constructive (101) et le châssis porteur (109) respectivement le support de montage, présentent des éléments de fixation correspondants (107, 120, 110, 110a, 108, 111, 112) qui peuvent être assemblés dans la direction de conduite.

9. Dispositif selon la revendication 6 ou 7, **caractérisé en ce que** les éléments de préfixation sont réalisés sous forme d'éléments de réception en forme de fourche (106) et sous forme de tourillons (105).

10. Dispositif selon la revendication 9, **caractérisé en ce que** deux éléments de réception (106) sont disposés sur le sous-châssis (100) et deux tourillons (105) sur l'unité constructive (101).

11. Dispositif selon la revendication 9 ou 10, **caractérisé en ce que** les tourillons (105) sont disposés transversalement à la direction de conduite.

12. Dispositif selon l'une quelconque des revendications 6 à 11, **caractérisé en ce que** les tourillons (105) peuvent être encliquetés dans les éléments de réception (106).

13. Dispositif selon l'une quelconque des revendications 8 à 12, **caractérisé en ce que** les éléments de fixation correspondants présentent à chaque fois un élément élastique (7, 12, 107, 112), de préférence un élément élastomère.

14. Dispositif selon l'une quelconque des revendications 8 à 13, **caractérisé en ce qu'**au moins un élément de fixation est réalisé sous forme de tourillon de palier longitudinal (10, 110), dont l'axe longitudinal s'étend dans la direction de conduite.

15. Dispositif selon la revendication 14, **caractérisé en ce qu'**au moins un élément de fixation est réalisé sous forme d'oeillet (120) qui reçoit le tourillon de palier longitudinal (110).

16. Dispositif selon la revendication 14 ou 15, **caractérisé en ce que** l'élément élastique est réalisé sous forme de douille (107) qui est disposée sur le tourillon de palier longitudinal (110).

17. Dispositif selon la revendication 14, 15, ou 16, **caractérisé en ce que** l'au moins un tourillon de palier longitudinal (110) est disposé sur le châssis porteur (109), respectivement le support de montage, et l'au moins un oeillet (120) est disposé sur l'unité constructive (101).

18. Dispositif selon au moins l'une quelconque des revendications 8 à 17, **caractérisé en ce qu'**au moins un élément de fixation est réalisé sous forme de tourillon de palier transversal (111), dont l'axe longitudinal s'étend transversalement à la direction de conduite.

19. Dispositif selon la revendication 18, **caractérisé en ce que** l'élément élastique est réalisé sous forme de douille (112) disposée sur le tourillon de palier transversal (111).

20. Dispositif selon la revendication 18 ou 19, **caractérisé en ce qu'**au moins un élément de fixation est réalisé sous forme de palier à coulisse (108), qui reçoit le tourillon de palier transversal (111) avec la douille élastique (112).

21. Dispositif selon la revendication 20, **caractérisé en ce que** le palier à coulisse (8, 108) présente un biseau d'insertion (8a) et une ouverture de réception (8b) pour le tourillon de palier transversal (11, 111).

22. Dispositif selon la revendication 21, **caractérisé en ce que** l'on dispose entre le biseau d'insertion (8a) et l'ouverture de réception (8b) un élément de retenue en forme de bourrelet (8c).

23. Dispositif selon au moins l'une quelconque des revendications 8 à 22, **caractérisé en ce que** les éléments de fixation (10, 11, 110, 111) sur le châssis porteur (9, 109) respectivement le support de montage, présentent une première distance de palier verticale et les éléments de fixation (7, 8, 107, 108) sur l'unité constructive (1, 101) présentent une deuxième distance de palier verticale et **en ce que** les distances de palier sont réalisées différemment pour obtenir une contrainte élastique.

24. Dispositif selon au moins l'une quelconque des revendications 6 à 23, **caractérisé en ce que** l'unité constructive (101) présente des échangeurs de chaleur (102, 103) avec des caisses collectrices (102a, 103a), notamment en plastique, et **en ce que** les éléments de préfixation et de fixation (105, 120) sont disposés sur les caisses collectrices (102a, 103a), notamment par moulage par injection.

25. Dispositif selon au moins l'une quelconque des revendications 6 à 24, **caractérisé en ce que** la liaison entre l'unité constructive (1, 101) et le châssis porteur (9, 109) respectivement le support de montage, par les éléments de fixation (8, 108) est réalisée de manière détachable, à l'encontre de la direction de conduite.

26. Dispositif selon au moins l'une quelconque des revendications 6 à 25, **caractérisé en ce qu'**un élément d'étanchéité (13) de préférence périphérique, est disposé, de préférence par moulage par injection, sur le châssis porteur (9, 9a), respectivement le support de montage, pour réaliser l'étanchéité d'une fente (14) entre le châssis porteur (9, 9a) respectivement le support de montage et l'unité constructive (1).

27. Dispositif selon au moins l'une quelconque des revendications 6 à 26, **caractérisé en ce que** l'on dispose sur le châssis porteur (9), respectivement le support de montage, du côté frontal, un guide d'air périphérique télescopable (15, 15a).

28. Dispositif selon la revendication 27, **caractérisé en ce que** le guide d'air est réalisé en une ou plusieurs parties, et se compose d'un matériau en mousse.
